Europäisches Patentamt

European Patent Office

Office européen des brevets

(11) Numéro de publication : **0 463 929 A1**

# (12) DEMANDE DE BREVET EUROPEEN

(21) Numéro de dépôt : **91401631.6**

(22) Date de dépôt : **18.06.91**

(51) Int. Cl.⁵ : **G02B 23/08,** G02B 23/12, G02B 23/16

(30) Priorité : **22.06.90 FR 9007838**

(43) Date de publication de la demande :
**02.01.92 Bulletin 92/01**

(84) Etats contractants désignés :
**CH DE GB IT LI NL SE**

(71) Demandeur : **THOMSON-TRT DEFENSE
88, rue Brillat-Savarin
F-75013 Paris (FR)**

(72) Inventeur : **Espie, Jean-Luc
THOMSON-CSF SCPI Cédex 67
F-92045 Paris la Défense (FR)**
Inventeur : **Malleret, Alain
THOMSON-CSF SCPI Cédex 67
F-92045 Paris la Défense (FR)**

(74) Mandataire : **Turlèque, Clotilde et al
THOMSON-CSF SCPI
F-92045 PARIS LA DEFENSE CEDEX 67 (FR)**

(54) **Bâti mécanique articulé notamment pour épiscope, et épiscope monté sur un tel bâti.**

(57)    L'invention concerne un bâti mécanique articulé, notamment pour épiscope, du type utilisé dans un véhicule blindé, et comprenant un réflecteur (5) escamotable, mobile entre deux positions extrêmes, permettant dans une première position escamotée la libre circulation des rayons lumineux reçus en direction d'un premier dispositif de traitement optique et/ou électronique desdit rayons lumineux, et dans une seconde position active la déviation desdits rayons lumineux en direction d'un second dispositif de traitement optique et/ou électronique desdits rayons lumineux pouvant pivoter en gisement de façon à élargir le champ de vision, caractérisé en ce qu'il comprend des moyens de repositionnement (22, 23, 24, 25, 26, 38, 39) automatique dudit second dispositif pivotable dans une position de point mort, permettant l'escamotage dudit réflecteur (5) escamotable, lesdits moyens de repositionnement (22, 23, 24, 25, 26, 38, 39) étant asservis à des moyens d'escamotage (20, 27, 28, 29, 31, 32, 33, 34, 35, 45) dudit réflecteur (5) escamotable.

EP 0 463 929 A1

Jouve, 18, rue Saint-Denis, 75001 PARIS

Fig. 2

Le domaine de l'invention est celui de la vision épiscopique.

L'invention concerne un bâti particulièrement adapté à un épiscope permettant deux modes de traitement distincts des rayons lumineux reçus, pouvant notamment être utilisé pour la vision de jour avec des moyens optiques classiques, et pour la vision de nuit, par exemple par l'intermédiaire d'un tube intensificateur de lumière.

Plus précisément, l'invention concerne des moyens mécaniques simplifiant et optimisant le passage d'un mode de vision à l'autre.

L'invention concerne également un épiscope monté sur un tel bâti.

L'invention trouve une application particulière dans les appaireils d'observation pour véhicules blindés, et notamment pour chars de combat. Plus généralement, l'épiscope de l'invention peut être utilisé dans tous les cas où il est nécessaire d'isoler l'observateur du domaine observé et où il est utile de disposer de deux types de traitement optique et/ou électronique des rayons lumineux reçus par l'épiscope, comprenant par exemple d'une part des moyens de vision directe par voie optique, et d'autre part par des moyens de visualisation électroniques,tel qu'un intensificateur de lumière, un détecteur infrarouge ou une caméra, avec capteur CCD ou autre.

Dans le cas particulier des véhicules blindés, le pilote dispose généralement, pour la vision de jour, d'au moins un épiscope optique classique, dit voie de jour, comprenant un réflecteur d'entrée recevant les rayons lumineux, et un réflecteur de sortie restituant les rayons lumineux au pilote. Selon le type d'épiscope, le trajet des rayons lumineux entre les deux réflecteurs peut être direct ou subir une ou plusieurs réflexions.

La voie de jour assure une vision optimale, tant que l'éclairement est suffisant. En revanche, elle ne permet pas le pilotage de nuit. Il n'est pas possible en effet, au moins en position de combat, d'utiliser des moyens d'éclairage intégrés au véhicule. Il est donc nécessaire d'utiliser une voie de nuit électronique, restituant au pilote une image visible du paysage, et comprenant par exemple un objectif, un tube intensificateur de lumière et un oculaire.

L'utilisation du véhicule dans toutes les conditions d'éclairement impose donc l'utilisation de deux épiscopes distincts. Le passage d'un mode de vision à l'autre nécessite alors le changement d'épiscopes.

Cette opération de démontage et de remontage est très préjudiciable pour le véhicule blindé. En effet, pendant quelques minutes, celui-ci est privé de tout moyen de vision. Il est alors très vulnérable, et pour éviter tout risque, est obligé de se retirer et de se cacher pendant l'échange d'épiscopes.

Un autre problème posé par cette technique est le stockage de l'épiscope non utilisé dans l'habitacle du véhicule, dans lequel l'espace est le plus souvent très restreint. De plus, cet épiscope non utilisé court de gros risques de détérioration, s'il n'est pas convenablement arrimé.

Par ailleurs, l'opération d'échange d'épiscopes entraîne une perte ponctuelle d'étanchéité. En particulier, le véhicule n'est alors plus protégé contre les risques nucléaires, bactériologiques et chimiques. Plus généralement, les démontages et remontages successifs peuvent modifier les conditions d'étanchéité, notamment au niveau de l'usure des joints.

L'utilisation de deux épiscopes indépendants pour le jour et la nuit pose également des problèmes dans les périodes d'éclairement intermédiaire, telles que l'aube et le crépuscule, ou lorsque certaines zones sont éclairées et d'autres non. Le temps de changement important d'un mode de vision à l'autre ne permet pas d'être en permanence dans les conditions optimales de vision.

De façon à supprimer cette opération d'échange, on a imaginé des épiscopes jour-nuit, comprenant dans un même boîtier une voie de jour classique et une voie de nuit à intensificateur de lumière. Ainsi, les documents de demandes de brevets français 85 02575 et 85 02576, déposés le 22.02.1985, présentent des épiscopes à voie de jour et voie de nuit sensiblement parallèles et placées l'une derrière l'autre, le réflecteur d'entrée étant mobile, et dirigeant les rayons lumineux vers l'une des deux voies, selon la position sélectionnée par le pilote.

En règle générale, les véhicules blindés comportent trois épiscopes de jour, permettant au pilote de voir de face et sur les côtés. En revanche, pour des raisons de coût et d'encombrement, il n'est pas envisageable d'utiliser trois dispositifs pour la vision de nuit. Ainsi, seul l'épiscope de face est amovible et peut être remplacé par un épiscope de nuit. Afin d'élargir le champ de vision du pilote, il a été imaginé de faire pivoter en gisement cet épiscope de nuit.

Le document de demande de brevet FR 85 02576 déjà mentionné décrit un tel épiscope jour-nuit, dont le dispositif de nuit peut ainsi pivoter. Cet épiscope pallie donc les inconvénients occasionnés par les changements d'épiscopes.. tout en permettant au pilote de disposer d'un large champ de vision, de jour comme de nuit.

Le passage de la voie de jour à la voie de nuit se tait par déplacement d'un réflecteur mobile. Dans une première position, ce réflecteur n'interfère pas sur les rayons lumineux, qui sont directement reçus par la voie de jour. Dans une seconde position, le réflecteur dévie les rayons lumineux en direction de la voie de nuit. Cette voie de nuit, comprenant le réflecteur mobile, un objectif, un tube intensificateur de lumière et un bioculaire peut alors tourner en gisement.

Pour permettre le passage de la voie de nuit à la voie de jour, c'est-à-dire l'escamotage du réflecteur mobile, il est tout d'abord nécessaire de repositionner la voie de nuit dans sa position centrale, puis de commander le passage de la voie de nuit à la voie de jour. En effet, dans les véhicules blindés en général, et dans les épiscopes en particulier, l'espace libre est très limité. L'escamotage du réflecteur ne peut donc être effectué que dans une position particulière. Il n'est pas envisageable, pour des raisons d'encombrement, de permettre l'escamotage du réflecteur quelque soit la position de la voie de nuit.

Cette double opération de repositionnement puis d'escamotage pose plusieurs problèmes. Notamment, du point de vue ergonomique, elle impose deux commandes successives. Le pilote risque d'oublier la première étape de repositionnement, et d'actionner directement la commande de passage de la voie de nuit à la voie de jour. Il y aura alors forçage de la mécanique et, éventuellement, détérioration du matériel. Par ailleurs, l'absence d'instantanéité du changement de voies, due au repositionnement préalable, peut s'avérer nuisible, notamment en situation de combat.

L'invention a notamment pour objectif de pallier ces différents inconvénients.

L'invention concerne ainsi un épiscope permettant de traiter les rayons lumineux reçus selon deux modes de traitement distincts, l'un des modes offrant un champ de vision élargi, par l'intermédiaire d'un dispositif pouvant pivoter en gisement.

Un objectif de l'invention est de fournir un bâti pour un tel épiscope, permettant le passage d'un mode de traitement des rayons lumineux à l'autre de façon simple, sûre et rapide.

Plus précisément, l'invention a pour objectif de fournir un tel bâti permettant à l'observateur de passer de l'un à l'autre des modes de traitement à l'aide d'une commande unique et simple, quelque soit la position du dispositif pivotable.

L'invention a également pour objectif de fournir un tel bâti, dans lequel le passage d'un mode de traitement à l'autre se fait de façon quasi-instantanée. En d'autres termes, il ne doit pas y avoir de temps d'immobilisation, pendant lequel le véhicule est aveugle, de façon à rendre possible notamment les changements de modes de traitement nombreux, en particulier dans les cas d'éclairement intermédiaire.

Un autre objectif de l'invention est de fournir un épiscope, le plus solide et fiable possible, en évitant toute possibilité de forçage par l'utilisateur, et en faisant appel uniquement à des moyens mécaniques.

L'invention a également pour objectif de fournir un tel épiscope, présentant un encombrement général limité. En effet, l'espace est très restreint dans les véhicules blindés. Par ailleurs, l'encombrement réduit de l'épiscope doit permettre son utilisation dans plusieurs types de véhicules.

Un objectif particulier de l'invention est de fournir un tel épiscope aisément démontable, et modulaire, notamment en ce qui concerne les deux dispositifs de traitement des rayons lumineux.

En particulier, l'invention a pour objectif de fournir un épiscope regroupant, dans un volume réduit, les fonctions requises pour un épiscope de conduite moderne, à savoir:

– vision de jour à partir d'un système classique à prismes,
– vision de nuit par intensification de lumière, avec visualisation sur bioculaire apportant un grand confort d'observation,
– rotation en gisement de la voie de nuit de façon à couvrir un champ de vision horizontal d'au moins 100°,
– commutation rapide pour passer d'un mode de fonctionnement à l'autre.

Ces objectifs, ainsi que d'autres qui apparaîtront par la suite, sont atteints selon l'invention à l'aide d'un bâti mécanique articulé, notamment pour épiscope, du type utilisé dans un véhicule blindé, comprenant un réflecteur escamotable, mobile entre deux positions extrêmes, permettant dans une première position escamotée la libre circulation des rayons lumineux reçus en direction d'un premier dispositif de traitement optique et/ou électronique desdits rayons lumineux, et dans une seconde position active la déviation desdits rayons lumineux en direction d'un second dispositif de traitement optique et/ou électronique desdits rayons lumineux pouvant pivoter en gisement de façon à élargir le champ de vision, comprenant des moyens de repositionnement automatique dudit second dispositif pivotable dans une position de point mort, permettant l'escamotage dudit réflecteur escamotable, lesdits moyens de repositionnement étant asservis à des moyens d'escamotage dudit réflecteur escamotable.

Ainsi, une seule commande permet le repositionnement du dispositif pivotable et l'escamotage du réflecteur. Par ailleurs, il n'y a pas de risque de forçage d'une commande d'escamotage lorsque le dispositif pivotable n'est pas dans sa position de repos.

Avantageusement, ledit réflecteur escamotable peut basculer entre deux positions extrêmes définissant un angle d'environ $\pi/2$.

De façon préférentielle, lesdits moyens d'escamotage comprennent des moyens de guidage de la course de déplacement dudit réflecteur consistant en une ailette, de forme générale semi-circulaire, comportant une rainure circonférencielle de réception et de guidage d'un picot solidaire du support dudit réflecteur escamotable.

Dans un mode de réalisation avantageux de l'invention, le mouvement en rotation dudit réflecteur escamotable est actionné par un jeu d'au moins deux biellettes articulées, une première biellette ayant son extrémité libre montée à rotation sur le support dudit réflecteur, et une seconde biellette ayant son extrémité libre entraînée en rotation par des moyens de transmission d'un mouvement actionnés par la commande de sélection de l'un desdits dispositifs.

Avantageusement, au moins une desdites biellettes présente au moins une courbure, de façon à limiter l'encombrement global dudit épiscope.

De façon avantageuse, dans le cas où ledit jeu de biellettes comprend deux biellettes, les trois axes de rotation correspondant aux extrémités desdites biellettes se trouvent sensiblement dans un même plan, lorsque ledit réflecteur escamotable est dans ladite position active.

Dans un mode de réalisation préférentiel, lesdits moyens de transmission d'un mouvement comprennent une tige de rotation sensiblement parallèle auxdits dispositifs de visualisation, et solidaire d'une manette de commande de sélection de l'un desdits dispositifs de traitement optique et/ou électronique, dont le mouvement de rotation est transmis à ladite seconde biellette par engrenage.

De façon avantageuse, le bâti selon l'invention comprend des moyens d'obturation dudit second dispositif de traitement optique et/ou électronique lorsque ledit réflecteur est en position escamotée, coopérant avec lesdits moyens d'escamotage.

Il est en effet souhaitable, notamment dans le cas où le second dispositif pivotable comprend des moyens de traitement tels qu'un tube intensificateur de lumière, de l'obturer lorsqu'il n'est pas utilisé.

Préférentiellement, lesdits moyens d'obturation sont constitués par l'une desdites biellettes.

Dans un mode de réalisation avantageux de l'invention, lesdits moyens de repositionnement comprennent au moins une biellette de repositionnement dont l'une des extrémités est solidaire dudit second dispositif pivotable comportant une glissière, dans laquelle un picot solidaire de moyens de commande d'escamotage peut coulisser, de façon que l'opération d'escamotage dudit réflecteur escamotable entraîne simultanément le repositionnement dudit second dispositif dans ladite position de point mort.

Préférentiellement, chacun desdits picots est monté de façon excentrée entre deux plateaux solidaires de la tige de transmission du mouvement de rotation de ladite manette de commande, de façon à former une sorte de vilebrequin.

Avantageusement, lesdits moyens de repositionnement comprennent un galet d'indexage dudit second dispositif dans ladite position de point mort, ledit galet étant monté sur le bâti et repoussé élastiquement, de façon à coopérer avec une encoche de réception ménagée dans ledit second dispositif pivotable, lorsque ledit second dispositif est en position de point mort.

Ce galet permet notamment au pilote de sentir tactilement que le dispositif pivotable est en sa position de point mort, qui correspond avantageusement à la position centrale.

De façon préférentielle, le bâti comprend au moins un ressort de traction de rappel dans les deux positions extrêmes dudit second dispositif pivotable.

L'invention concerne également un épiscope monté dans un bâti présentant au moins certaines des caractéristiques précédentes.

Dans un mode de réalisation avantageux de l'invention, l'épiscope comprend des moyens de solidarisation en rotation dudit réflecteur escamotable en position active avec l'oculaire dudit second dispositif pivotable, les moyens intermédiaires de traitement optique et/ou électronique dudit second dispositif étant fixe.

On limite ainsi le nombre des éléments mobiles au minimum. Cela permet d'obtenir un encombrement global réduit.

Dans le cas où le second dispositif comprend des moyens de traitement électronique desdits rayons lumineux, lesdits moyens d'escamotage actionnent avantageusement des moyens de mise en et hors fonction desdits moyens de traitement électronique.

Dans un mode de réalisation particulier, ledit premier dispositif de traitement des rayons lumineux est un dispositif optique, à base de réflecteurs. Ledit second dispositif pivotable peut notamment être un dispositif de vision de nuit, comprenant un objectif, un tube intensificateur et un bioculaire.

Dans un autre mode de réalisation, ledit second dispositif pivotable peut avantageusement comprendre un capteur de caméra et un écran de visualisation.

De façon à faciliter les instructions, et à rendre possible le changement de l'un desdits dispositifs de traitement des rayons lumineux, ces dispositifs sont préférentiellement placés dans des boîtiers indépendants.

D'autres caractéristiques et avantages de la présente invention apparaîtront à la lecture de la description suivante d'un mode de réalisation particulier de l'invention, donné à titre illustratif et non limitatif, et des dessins annexés dans lesquels :

– la figure 1 représente une coupe verticale des composants optiques d'un épiscope susceptible d'incorporer un bâti articulé selon la présente invention ;

– la figure 2 est une vue en coupe verticale d'une maquette illustrant un mode de réalisation avantageux du bâti de l'invention en position dite "active" (position "voie de nuit" dans le cas de son utilisation dans un épiscope) ;

– la figure 3 est une vue de dessus des moyens de repositionnement automatique en gisement du bâti de la figure 2 ;

– la figure 4 est une vue en perspective du bâti de la figure 2 en position dite escamotée ( "voie de jour").

La description qui suit se rapporte à un mode de réalisation préférentiel de l'invention, dans lequel le bâti articulé est utilisé dans un épiscope "jour/nuit", c'est-à-dire permettant de sélectionner l'une ou l'autre des deux voies de traitement du signal lumineux suivant la luminosité extérieure.

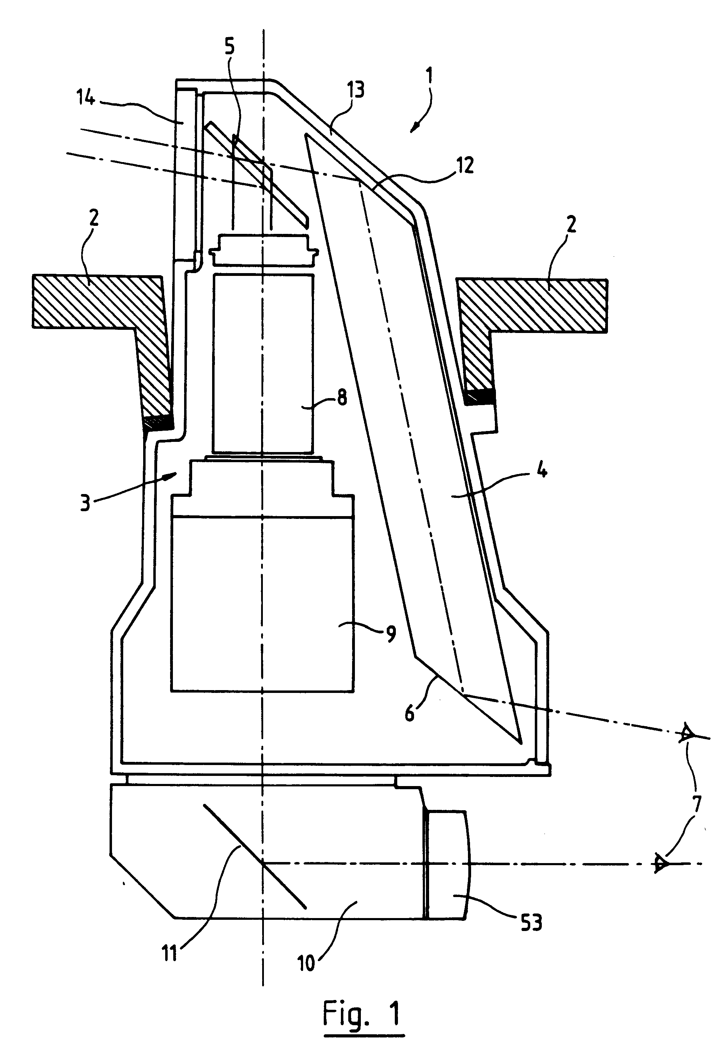

La figure 1 représente une coupe verticale des composants optiques d'un épiscope susceptible d'incorporer un bâti articulé selon la présente invention.

Un épiscope 1 traverse le blindage 2 d'un véhicule. L'épiscope 1 comprend deux dispositifs épiscopiques indépendants 3 et 4 juxtaposés.

Les rayons lumineux reçus par la partie supérieure de l'épiscope 1 sont dirigés soit vers le dispositi 3, appelé voie de nuit, soit vers le dispositif 4, appelé voie de jour, selon la position d'un réflecteur escamotable 5. Ce réflecteur peut notamment être un miroir ou un prisme triangulaire.

Lorsque les rayons lumineux sont d'intensité suffisante, le réflecteur escamotable 5 est rabattu de telle sorte que les rayons lumineux passent directement dans la voie de jour 4.

Selon un mode de mise en oeuvre particulier, le premier dispositif 4 peut comprendre deux réflecteurs 6 et 12 réfléchissant les signaux lumineux entrant dans l'épiscope vers un observateur 7, typiquement un conducteur d'engin blindé.

Les signaux lumineux provenant de l'extérieur sont réfléchis par le réflecteur 12 vers le réflecteur 6 qui les envoie vers l'observateur 7.

Le premier dispositif 4 peut également comprendre un ou plusieurs objectifs de traitement du signal lumineux ou alors des moyens de traitement électroniques (capteurs, caméra CCD ou autre ).

Lorsque l'épiscope fonctionne en mode jour, c'est-à-dire lorsque les rayons sont admis dans le dispositif 4, l'épiscope est immobile en rotation. Il n'est pas nécessaire de pouvoir tourner la voie de jour en gisement puisque les engins blindés connus comportent généralement deux épiscopes de jour latéraux.

Le passage de la voie de jour à la voie de nuit est effectué par basculement du réflecteur escamotable 5 au-dessus de la voie de nuit 3. Ainsi, les rayons lumineux admis dans l'épiscope sont dirigés vers le deuxième dispositif de traitement 3 et ne parviennent plus à la voie de jour 4.

La voie de nuit 3 est constituée, dans la configuration de la figure 1, d'un objectif 8, d'un tube intensificateur de lumière 9 et d'un bioculaire 10. L'objectif 8 et le tube intensificateur de lumière 9 sont juxtaposés dans la voie 3. Le bioculaire 10 comprend un réflecteur 11 et des moyens de traitement optique non représentés, permettant d'obtenir une image visible par les deux yeux à la sortie du bioculaire.

Les rayons lumineux provenant de l'extérieur sont déviés par le réflecteur escamotable 5 vers l'objectif 8, amplifiés électroniquement par l'intensificateur de lumière 9, pénètrent dans le bioculaire 10, sont réfléchis par le réflecteur 11 et ressortent du bioculaire 10 pour être visualisés par l'observateur 7.

La voie de nuit 3 peut également être constituée de capteurs infrarouges, CCD ou autres ou de dispositifs de traitement d'un signal lumineux. Par exemple, le tube intensificateur 9 peut être remplacé par un capteur de caméra et le bioculaire 10 par un écran de visualisation.

Lorsque l'épiscope 1 selon la présente invention est en position nuit, c'est-à-dire lorsque le réflecteur escamotable est en position active (déviation des rayons lumineux vers la voie 3), l'observateur 7 peut commander le gisement de la voie de nuit, c'est-à-dire sa rotation autour d'un axe vertical.

Il est à noter qu'en cas de pivotement en gisement, l'objectif 8 et le tube intensificateur 9 restent avantageusement immobiles, seuls le réflecteur escamotable 5 et le bioculaire 10 étant libres en rotation. Cela permet de réduire l'encombrement général de l'épiscope.

Avantageusement, les deux voies de traitement des rayons lumineux sont fixées dans des boîtiers indépendants, liés l'un à l'autre par exemple par vissage. Ces deux boîtiers assemblés constituent l'enveloppe étanche de l'épiscope.

Ainsi, la partie extérieure au véhicule reste fixe, ce qui permet d'assurer, de façon simple, l'étanchéité entre l'épiscope et le blindage du tait de l'absence de pièce tournante à ce niveau.

Ceci permet aussi de protéger au mieux la partie supérieure de l'épiscope à l'aide d'un étrier fixé sur le blindage.

Par ailleurs, la modularité des deux voies de traitement présente de nombreux avantages. Cela permet d'une part de réaliser une voie de nuit commune à plusieurs types d'épiscopes pouvant prendre place dans différents types de véhicules blindés, seuls la voie de jour et le boîtier de l'épiscope devant être adaptés.

L'intérêt économique lié à l'aspect modulaire de ces équipements vient d'une part des réductions de coût envisageables sur les modules communs aux différents épiscopes du tait de quantités de fabrication plus importantes et d'autre part de la maintenance commune à ces matériels.

On notera également que l'existence d'un hublot 14 de tête indépendant des prismes supérieurs des voies de jour et de nuit autorise une maintenance facile et peu onéreuse de ce composant particulièrement exposé aux contraintes extérieures. Ce hublot 14 peut avantageusement comprendre des moyens de dégivrage, par exemple par traitement diélectrique résistif.

De même, l'oculaire 53 peut disposer de moyens de désembuage, constitués par exemple par une résistance chauffante.

De façon avantageuse, un appui front (non représenté) pouvant occuper une position "jour" et une position "nuit" assure en position nuit la protection mécanique du prisme inférieur 6 de jour et l'obturation de la voie de jour 4, empêchant toute fuite de lumière de l'intérieur vers l'extérieur du char.

Ainsi que cela a été précisé, l'épiscope décrit comprend une voie de jour optique, et une voie de nuit à tube intensificateur de lumière. Toutefois, l'invention s'applique à tout type de traitement des rayons lumineux, optique ou électronique. Ainsi, il est possible d'utiliser des capteurs photosensibles, coopérant avec des écrans. Un exemple de réalisation est l'utilisation d'une caméra à CCD intensifiés, avec visualisation sur un écran plat, à cristaux liquides ou autres. Les avantages d'un tel épiscope sont notamment :

– possibilité de transmettre l'image issue de l'épiscope vidéo au chef de char par exemple,

– possibilité de visualiser de jour comme de nuit des images provenant d'autres senseurs (caméra de recul, caméra thermique, etc),

– possibilité d'incruster des informations complexes sur le moniteur de l'épiscope.

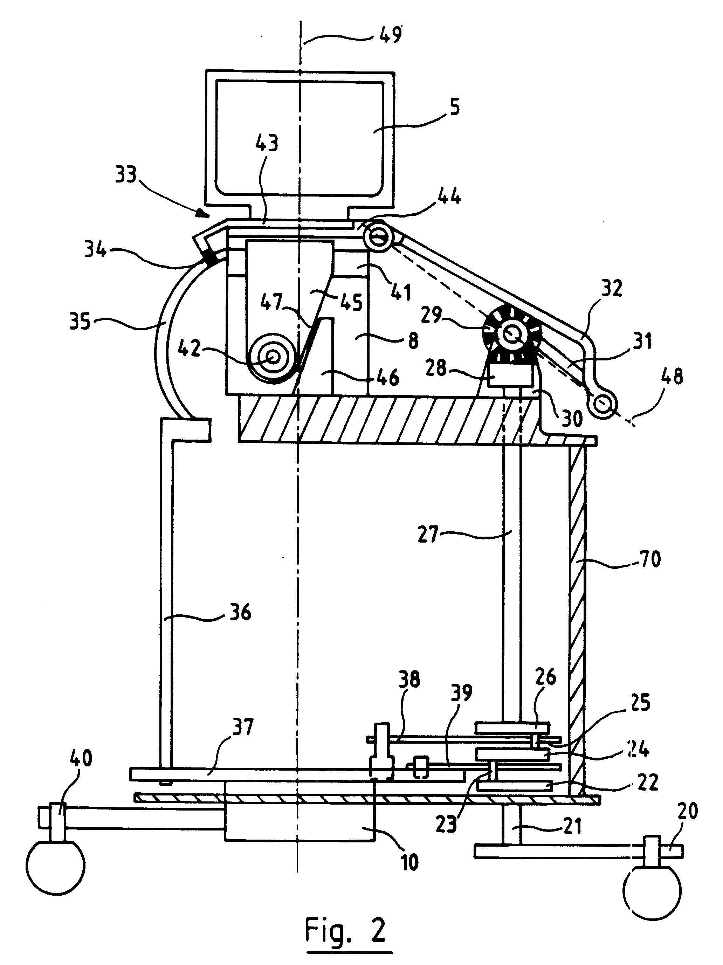

La figure 2 est une vue en coupe verticale d'une maquette illustrant un mode de réalisation avantageux du bâti de l'invention en position dite "active" (position "voie de nuit" dans le cas de son utilisation dans un épiscope) ;

Le basculement du réflecteur mobile 5 est commandé par déplacement circulaire d'une manette de commande 20 de sélection d'un des dispositifs 3 et 4 (fig.1). La manette 20 peut prendre deux positions extrêmes grâce à des moyens de rappel non représentés. La manette de commande 20 est reliée à une tige de transmission 21 solidaire d'un plateau 22. Au-dessus du plateau 22 sont disposés deux autres plateaux 24 et 26 espacés entre eux par des picots 23 et 25 formant manivelles. Les picots 23 et 25 sont fixés en position excentrique par rapport à un axe passant par la tige de transmission et les centres des trois plateaux 22, 24 et 26, respectivement entre les plateaux 22, 24 et 24, 26, de façon à former une sorte de vilebrequin.

Le plateau supérieur 26 est également solidaire d'une tige de rotation 27 sensiblement parallèle aux dispositifs de visualisation 3 et 4.

Ces plateaux 22, 24, 26 et picots 23, 25 permettent, en coopération avec les biellettes 38, 39, le repositionnement automatique de la voie de nuit lors du passage du mode de vision de nuit au mode de vision de jour, selon le principe expliqué plus loin.

La tige de rotation 27 est munie d'un pignon tronconique 28 à son extrémité supérieure. Un autre pignon tronconique 29 est monté libre en rotation perpendiculairement au pignon 28 sur un support 30, formant engrenage.

L'extrémité d'une biellette 31 est fixée de façon solidaire au pignon tronconique 29 et son autre extrémité est fixée à une biellette coudée 32.

L'autre extrémité de la biellette 32 est montée libre à rotation sur un support 33 du réflecteur escamotable 5 mobile en rotation. Le support 33 du réflecteur 5 est disposé au-dessus de l'objectif 8 de la voie de nuit, de telle sorte que le réflecteur 5, dans la position active représentée, transmet les rayons lumineux vers l'objectif 8.

Le support 33 est constitué d'une partie fixe 44 reliée à la biellette 32 et d'une partie mobile 43 libre en rotation par rapport à la partie fixe 44. Le réflecteur 5 est fixé de façon solidaire à la partie mobile 43 de façon à pouvoir pivoter en gisement autour de l'axe 49, lorsqu'il est dans la position "active" non basculée, de la figure 2. La partie fixe 44 du support 33 est solidaire d'un jeu de deux pattes de fixation symétriques 45 (dont une seule est visible sur la figure). Les pattes 45 sont mobiles en rotation autour d'un axe 42 entre deux positions extrêmes de façon à entraîner le réflecteur 5 en basculement entre la position "active" et la position "escamotée".

En position active, un jeu de deux butées 46 (dont une seule est représentée) servent à un bon positionnement et à une bonne immobilisation en fin de course du réflecteur 5 en rentrant en contact avec la partie frontale de chacune des pattes 45.

Afin d'amortir les vibrations, des cales 47 en matériau élastique, tel que du caoutchouc, sont disposées sur les butées 46. De plus, un alignement des trois axes de rotation passant par les extrémités des biellettes 31 et 32 dans un même plan 48, lorsque le réflecteur 5 est en position active, permet d'assurer une bonne immunisation du dispositif aux vibrations.

La partie mobile 43 est munie d'un picot 34 pouvant se déplacer dans des moyens de guidage 35. Ces moyens de guidage sont avantageusement constitués d'une ailette semi-circulaire avec rainure circonférentielle de réception du picot 34. L'extrémité supérieure de l'ailette est solidaire d'une bague 41 pouvant pivoter autour de l'objectif 8 situé sous le support 33. L'extrémité intérieure de l'ailette 35 est fixée solidairement à une tige 36 solidaire d'un plateau 37. Le plateau 37 est avantageusement de forme circulaire et forme plateau de fixation du bioculaire 10. Grâce à ce système de liaison, toute rotation du plateau 37 (auquel est fixé le bioculaire 10) entraîne la rotation du réflecteur supérieur 5, via la tige 36, l'ailette 35 et la bague 41 liée à la partie mobile 43.

Un autre mode de mise en oeuvre consiste à fixer l'extrémité intérieure de la tige 36 directement sur le bioculaire 10.

Les picots 23 et 25 servent d'axes de guidage à des biellettes de repositionnement 38 et 39 comprenant chacune une lumière oblongue formant glissière. Chaque biellette est montée à rotation sur le plateau 37 à l'une de ses extrémités, ou sur le bioculaire 10, selon le mode de réalisation choisi. Le bioculaire 10 est solidaire d'un bras de commande 40 permettant de faire pivoter en gisement le dispositif représenté.

Les éléments hachurés 70 représentent la partie fixe du bâti.

La description suivante explique le fonctionnement du dispositif de la figure 2.

En position active, la mise en rotation, notamment effectuée manuellement, de la manette de commande 20, provoque la rotation de la tige de transmission 21 qui entraîne la rotation des plateaux 22, 24 et 26 et de la tige de rotation 27. Les biellettes 38 et 39 coulissent librement lors d'une rotation de la manette 20, leur coulissement étant guidé par les picots 23 et 25.

La rotation de la tige de rotation 27 provoque celle de l'engrenage constitué par les pignons tronconiques 28 et 29.

La rotation du pignon tronconique 29 dans le sens trigonométrique provoque la rotation selon ce même sens de la biellette d'escamotage 31. Cette rotation provoque l'avancée de la biellette 32 en direction de l'objectif 8 et fait basculer le support 33 et le réflecteur 5 autour de l'axe 42, le guidage de la partie mobile 43 du support 33 étant assuré par le maintien du picot 34 dans l'ailette 35 semi-circulaire avec rainure circonférentielle de réception.

L'escamotage réalisé permet le passage des rayons lumineux vers l'autre voie de traitement, notamment la voie de jour dans le mode de réalisation décrit, puisque la voie de nuit est disposée entre l'entrée des rayons lumineux dans l'épiscope et la voie de jour. Lorsque le réflecteur est dans sa position extrême basse, il est dit en position escamotée, c'est-à-dire qu'il ne réfléchit plus les rayons lumineux.

Une rotation de la manette 20 dans la direction opposée permet de repositionner le réflecteur en position active.

Comme déjà précisé, lorsque le réflecteur est en position active, la rotation en gisement de l'ensemble bioculaire/réflecteur est permise.

La rotation en gisement est commandée manuellement par rotation du bras de commande 40. Ce bras de commande 40 est fixé soit directement au bioculaire 10, comme représenté en figure 2, soit au plateau 37 de maintien du bioculaire 10.

Il est à noter qu'il est également possible de pourvoir le dispositif décrit de moteurs permettant de remplacer les commandes de rotation du bras de commande 40 et/ou de la manette de commande 20 de sélection d'un des dispositifs de traitement 3, 4. Dans ce cas, le fonctionnement des moteurs peut être asservi au mouvement du volant du véhicule blindé ou de la tête du pilote.

La rotation du bras de commande 40 provoque celle de l'ailette semi-circulaire 35 fixée à la bague 41 libre en rotation autour de l'objectif fixe 8. Le picot 34 étant engagé dans l'ailette semi-circulaire 35 et solidaire de la partie mobile en rotation 43 sur laquelle est disposé le réflecteur 5, permet la rotation du réflecteur 5. La transmission réalisée étant "directe", le réflecteur 5 tourne du même angle que le bioculaire 10.

Ce dispositif permet donc à l'observateur situé dans l'engin blindé de visualiser tout un champ autour de lui en voie de nuit. Dans le mode de réalisation décrit, le champ couvert est d'environ 110°, grâce à la rotation en gisement de ± 30° autour de la position de point mort.

Il est à noter que les moyens d'escamotage du réflecteur 5 constitués par les plateaux 22, 24, 26, la tige de rotation 27, les pignons 28, 29, les biellettes 31, 32 et la partie fixe 44 du support 33 restent immobiles lors de l'actionnement du bras de commande 40, grâce au coulissement des picots 23 et 25 dans les biellettes de repositionnement 38 et 39 dont une extrémité est solidaire du plateau 37 ou de la surface supérieure du bioculaire 10. Les positions extrêmes de la voie de nuit sont atteintes lorsque les biellettes de repositionnement 38, 39 arrivent en butée contre les picots 25 et 23 respectivement.

Une des principales caractéristiques de la présente invention réside dans le fait que le passage de la voie de nuit à la voie de jour est réalisé automatiquement, par simple actionnement de la manette de commande 20 pour passer en voie de jour, quelque soit la position en gisement du réflecteur 5.

Avantageusement, le passage de la voie de jour à la voie de nuit entraîne automatiquement la mise en fonction des moyens électroniques, et notamment du tube intensificateur, par exemple par l'intermédiaire d'un micro-contact.

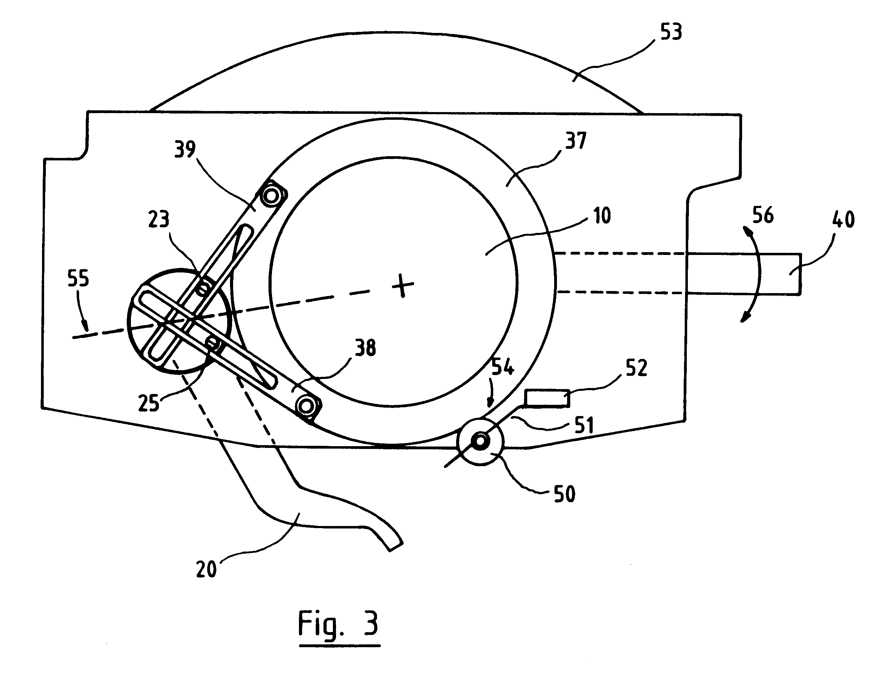

La figure 3 est une vue de dessus des moyens de repositionnement automatique en gisement du bâti de la figure 2. Le réflecteur est en position dite de point mort, par exemple immédiatement après le passage de la position jour à la position nuit, sans qu'il y ait eu action sur le bras de commande 40. Le plateau 24 séparant les picots 23 et 25 n'est pas représenté pour des raisons de commodité de compréhension. En position de point mort du dispositif pivotable, les picots 23 et 25 sont situés du côté du bioculaire 10, sensiblement à égale distance de part et d'autre d'un axe 55 passant par le centre du bioculaire 10.

Les biellettes de repositionnement 38 et 39 munies de glissières comprenant respectivement les picots 25 et 23 formant manivelle présentent entre elles un angle sensiblement droit. Les extrémités non libres des biellettes 38 et 39 sont fixées à rotation sur le support 37 du bioculaire 10.

Le support 37 présente avantageusement une encoche de réception 54 dans laquelle vient s'insérer un pion mobile 50 de blocage réversible monté sur un ressort de traction 51 de rappel solidaire d'un support 52 monté sur le bâti, lorsque le dispositif est en position de point mort.

A partir de la position de point mort, l'actionnement de la manette de commande 20 provoque le coulissement des biellettes de repositionnement 38 et 39 dans les picots 25 et 23, et le bioculaire 10 reste immobile.

Le mécanisme de repositionnement automatique du réflecteur 5 fonctionne lorsque, en position de nuit, le dispositif n'est pas dans la position de point mort, c'est-à-dire que le pion mobile 50 de blocage réversible est hors de l'encoche de réception 54. De plus, un des picots 23 ou 25 s'est alors rapproché de l'extrémité libre de sa biellette alors que l'autre s'est éloigné de l'extrémité libre de la sienne, selon le sens 56 de déplacement du bras de commande 40.

A partir d'une telle position, la rotation de la manette de commande 20 pour passer en visualisation jour provoque la rotation du plateau 37 et du bioculaire 10 par amenée en butée d'un des picots 23 ou 25 contre l'extrémité libre d'une glissière d'une des biellettes de repositionnement. La rotation de la manette 20 provoque également la rotation de la tige 27 et donc le pivotement du réflecteur 5 autour de l'axe 42, en même temps que son repositionnement en position escamotée par rotation de la partie mobile 43 du support 33. Le repositiornement du réflecteur 5 est permis par engagement du picot 34 dans l'ailette semi-circulaire 35 qui se déplace solidairement avec le plateau 37 (ou avec le bioculaire 10).

Lorsque la manette de commande 20 arrive en butée dans la position extrême correspondant à la mise en voie de jour du dispositif, le galet d'indexage 50 entre dans l'encoche 54 du plateau 37 ou du bioculaire 10 et les biellettes de repositionnement sont à nouveau dans la position de la figure 3. Les picots 23 et 25 sont par contre dans une position opposée sur les plateaux 22 et 24, par rapport à un axe passant par le centre des plateaux et perpendiculaire à l'axe 55.

Comme déjà précisé, lorsque l'épiscope est en position "voie de jour", la liberté de mouvement en rotation de la voie de nuit de l'épiscope est supprimée.

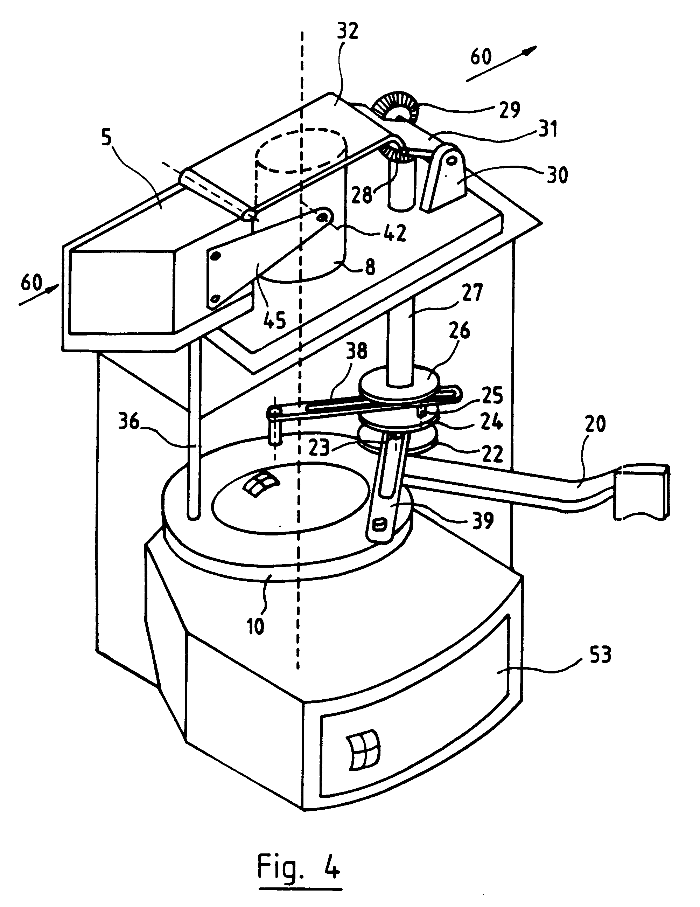

La figure 4 est une vue en perspective du bâti de la figure 2 en position dite escamotée ( "voie de jour").

Comme précédemment décrit, les biellettes de repositionnement 38 et 39 sont sensiblement perpendiculaires entre elles et leurs picots de guidage sont en positions opposées à celles représentées à la figure 3, la tige de rotation et le vilebrequin 22, 23, 24, 25 et 26 ayant tourné de π.

La position escamotée du réflecteur 5 représentée assure simultanément d'une part le dégagement total du passage des rayons lumineux en direction 60 dans la voie de jour, et d'autre part l'obturation de l'objectif 8 par la biellette 32.

Le réflecteur 5 est en position escamotée et le déplacement des biellettes 31 et 32 est calculé de telle sorte que celui-ci ne nécessite qu'un espace de débattement réduit. Le fait d'utiliser au moins une biellette 32 présentant une courbure permet de réduire ce débattement. Par ailleurs, la forme de cette biellette permet d'obturer complètement l'objectif 8.

On remarquera que la rotation de la manette de commande 20 entre ses deux positions extrêmes est de 180°, alors que la rotation du support escamotable 33 n'est que de 90° autour de l'axe 42.

**Revendications**

1. Bâti mécanique articulé, notamment pour épiscope, du type utilisé dans un véhicule blindé, et comprenant un réflecteur (5) escamotable, mobile entre deux positions extrêmes, permettant dans une première position escamotée la libre circulation des rayons lumineux reçus en direction d'un premier dispositif (4) de traitement optique et/ou électronique desdits rayons lumineux, et dans une seconde position active la déviation desdits rayons lumineux en direction d'un second dispositif (3) de traitement optique et/ou électronique desdits rayons lumineux pouvant pivoter en gisement de façon à élargir le champ de vision, caractérisé en ce qu'il comprend des moyens de repositionnement (22, 23. 24, 25, 26, 38, 39, 50) automatique dudit second dispositif (3) pivotable dans une position de point mort, permettant l'escamotage dudit réflecteur (5) escamotable. lesdits moyens de repositionnement (22, 23, 24, 25, 26, 38, 39, 50) étant asservis à des moyens d'escamotage (20, 27, 28, 29, 31, 32, 33, 34, 35, 45) dudit réfleceur (5) escamotable.

2. Bâti selon la revendication 1, caractérisé en ce que ledit réflecteur (5) escamotable bascule entre deux positions extrêmes définissant un angle d'environ π/2.

3. Bâti selon la revendication 2, caractérisé en ce que ledits moyens d'escamotage (20, 27, 28, 29, 31, 32, 33, 34, 35, 45) comprennent des moyens de guidage (34, 35) de la course de déplacement dudit réflecteur (5) consistant en une ailette (35), de forme générale semi-circulaire, comportant une rainure circonférencielle de réception et de guidage d'un picot (34) solidaire du support (43) dudit réflecteur (5) escamotable.

4. Bâti selon l'une quelconque des revendications 2 ou 3, caractérisé en ce que le mouvement en rotation dudit réflecteur (5) escamotable est actionné par un jeu d'au moins deux biellettes (31, 32) articulées, une première biellette (32) ayant son extrémité libre montée à rotation sur le support (44) dudit réflecteur (5), et une seconde biellette (31) ayant son extrémité libre entraînée en rotation par des moyens de transmission (27, 28, 29) d'un mouvement actionnés par la commande de sélection (20) de l'un desdits dispositifs (3, 4).

5. Bâti selon la revendication 4, caractérisé en ce qu'au moins une desdites biellettes (31, 32) présente au moins une courbure, de façon à limiter l'encombrement global dudit épiscope.

6. Bâti selon l'une quelconque des revendications 4 ou 5, caractérisé en ce que ledit jeu de biellettes (31, 32) comprend deux biellettes, et en ce que les trois axes de rotation correspondant aux extrémités desdites biellettes se trouvent sensiblement dans un même plan (48), lorsque ledit réflecteur (5) escamolable est dans ladite position active.

7. Bâti selon l'une quelconque des revendications 4 à 6, caractérisé en ce que lesdits moyens de transmission (27, 28, 29) d'un mouvement comprennent une tige (27) sensiblement parallèle auxdits dispositifs (3, 4) de visualisation, et solidaire d'une manette (20) de commande de sélection de l'un desdits dispositifs (3, 4) de traitement optique et/ou électronique, dont le mouvement de rotation est transmis à ladite seconde biellette (31) par un engrenage (28, 29).

8. Bâti selon l'une quelconque des revendications 1 à 7, caractérisé en ce qu'il comprend des moyens (32) d'obturation dudit second dispositif (3) de traitement optique et/ou électronique lorsque ledit réflecteur (5) est en position escamotée, coopérant avec lesdits moyens d'escamotage (20, 27, 28, 29, 31, 32, 33, 34, 35, 45).

9. Bâti selon la revendication 8 et l'une quelconque des revendications 2 à 7, caractérisé en ce que lesdits moyens d'obturation (32) sont constitués par l'une desdites biellettes (32).

10. Bâti selon l'une quelconque des revendications 1 à 8, caractérisé en ce que lesdits moyens de repositionnement (22, 23, 24, 25, 26, 38, 39, 50) comprennent au moins une biellette (38, 39) de repositionnement dont l'une des extrémités est solidaire dudit second dispositif (10, 37) pivotable comportant une glissière, dans laquelle un picot (23, 25) solidaire de moyens (20, 27) de commande d'escamotage peut coulisser, de façon que l'opération d'escamotage dudit réflecteur (5) escamotable entraîne simultanément le repositionnement dudit second dispositif (10, 37) dans ladite position de point mort.

11. Bâti selon la revendication 10 et la revendication 7, caractérisé en ce que chacun desdits picots (23, 25) est monté entre deux plateaux (22, 24, 26) solidaires de la tige (27) de transmission du mouvement de rotation de ladite manette (20).

12. Bâti selon l'une quelconque des revendications 1 à 11, caractérisé en ce que lesdits moyens de repositionnement (22, 23, 24, 25, 26, 38, 39, 50) comprennent un galet d'indexage (50) dudit second dispositif (3) dans ladite position de point mort, ledit galet (50) étant monté sur le bâti (70) et repoussé élastiquement, de façon à coopérer avec une encoche (54) de réception ménagée dans ledit second dispositif (10, 37) pivotable, lorsque ledit second dispositif (10, 37) est en position de point mort.

13. Bâti selon l'une quelconque des revendications 1 à 12, caractérisé en ce qu'il comprend au moins un ressort de traction de rappel dans les deux positions extrêmes dudit second dispositif (10, 37) pivotable.

14. Episcope (1) monté dans un bâti selon l'une quelconque des revendications 1 à 13.

15. Episcope selon la revendication 14, caractérisé en ce qu'il comprend des moyens de solidarisation (35, 36) en rotation dudit réflecteur (5) escamotable en position active avec l'oculaire dudit second dispositif (10, 37) pivotable, les moyens intermédiaires (8, 9) de traitement optique et/ou électronique dudit second dispositif étant fixes.

16. Episcope selon l'une quelconque des revendications 14 et 15, du type comprenant un second dispositif (3) à moyens de traitement électronique dedits rayons lumineux, caractérisé en ce que lesdits moyens d'escamotage (20, 27, 28, 29, 31, 32, 33, 34, 35, 45) actionnent des moyens de mise en et hors fonction dedits moyens de traitement électronique.

17. Episcope selon l'une quelconque des revendications 14 à 16, caractérisé en ce que ledit premier dispositif (4) de traitement des rayons lumineux est un dispositif optique, à base de réflecteurs (6, 12).

18. Episcope selon l'une quelconque des revendications 14 à 17, caractérisé en ce que ledit second dispositif (3) pivotable est un dispositif de vision de nuit, comprenant un objectif (8), un tube intensificateur (9) et un bioculaire (10).

19. Episcope selon l'une quelconque des revendications 14 à 18, caractérisé en ce que ledit second dispositif (3) pivotable comprend un capteur de caméra et un écran de visualisation.

20. Episcope selon l'une quelconque des revendications 14 à 19, caractérisé en ce que lesdits dispositifs (3, 4) de traitement des rayons lumineux sont placés dans des boîtiers indépendants.

Fig. 1

## Fig. 2

Fig. 3

Fig. 4

**Office européen des brevets**

# RAPPORT DE RECHERCHE EUROPEENNE

Numero de la demande

EP 91 40 1631

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | EP-A-0 193 236 (SOCIETE CIVILE S.P.I.D.) * Page 5, lignes 27-35; page 6; page 7, lignes 1-14; page 8, lignes 4-34; page 9, lignes 1-26; page 10, lignes 25-35; page 11; Page 12, lignes 1-6; figures 1-3b * --- | 1,2,4,8,13,14-18 | G 02 B 23/08 G 02 B 23/12 G 02 B 23/16 |
| D,A | EP-A-0 192 309 (SOCIETE CIVILE S.P.I.D.) * Page 4, lignes 23-35; page 5, lignes 1-15; page 6, lignes 10-35; pages 7-9; page 10, lignes 1-9; figures 1-4 * --- | 1,4,8,13,14-18 | |
| A | LU-A- 41 874 (BREVETS AERO-MECANIQUES) * Page 5, alinéa 2 * --- | 7 | |
| A | US-A-3 782 808 (HOHL et al.) * Colonne 4, lignes 24-62; colonne 6, lignes 7-62; figures 1-4 * ----- | 7,12 | |

### DOMAINES TECHNIQUES RECHERCHES (Int. Cl.5)

G 02 B

Le présent rapport a été établi pour toutes les revendications

| Lieu de la recherche | Date d'achèvement de la recherche | Examinateur |
|---|---|---|
| LA HAYE | 30-08-1991 | WARD S.M. |

15